# EUROPEAN PATENT SPECIFICATION

(11) **EP 4 446 999 B1**
(45) Date of publication and mention of the grant of the patent: **23.09.2026**
(21) Application number: 24169938.8
(22) Date of filing: 12.04.2024
(51) Int. Cl.: G06V 10/44, G06V 10/82, G06V 20/40, G06V 40/20

(54) **ACTION LOCALIZATION IN VIDEOS USING LEARNED QUERIES**
AKTIONSLOKALISIERUNG IN VIDEOS UNTER VERWENDUNG GELERNTER ANFRAGEN
LOCALISATION D'ACTIONS DANS DES VIDÉOS À L'AIDE DE REQUÊTES APPRISES

(30) Priority: 13.04.2023 US 202363459237 P
(43) Date of publication of application: 16.10.2024
(73) Proprietor: GOOGLE LLC, Mountain View CA 94043 (US)
(72) Inventor: GRITSENKO, Alexey Alexeevich, 1082 Amsterdam (NL); XIONG, Xuehan, Mountain View, 94043 (US); DJOLONGA, Josip, 8002 Zurich (CH); DEHGHANI, Mostafa, 1082 Amsterdam (NL); SUN, Chen, Mountain View, 94043 (US); LUCIC, Mario, 8002 Zurich (CH); SCHMID, Cordelia Luise, 75009 Paris (FR); ARNAB, Anurag, 75009 Paris (FR)
(74) Representative: Varley, James Richard

(56) References cited:
- ZHAO JIAOJIAO ET AL: "TubeR: Tubelet Transformer for Video Action Detection", 2022 IEEE/CVF CONFERENCE ON COMPUTER VISION AND PATTERN RECOGNITION (CVPR), IEEE, 18 June 2022 (2022-06-18), pages 13588 - 13597, XP034193610, DOI: 10.1109/CVPR52688.2022.01323
- LI ZEXIAN ET AL: "STD-TR: End-to-End Spatio-Temporal Action Detection with Transformers", 2021 CHINA AUTOMATION CONGRESS (CAC), IEEE, 22 October 2021 (2021-10-22), pages 7615 - 7620, XP034100768, DOI: 10.1109/CAC53003.2021.9727692

## Description

### BACKGROUND

This specification relates to processing videos using machine learning models.

As one example, neural networks are machine learning models that employ one or more layers of nonlinear units to predict an output for a received input. Some neural networks include one or more hidden layers in addition to an output layer. The output of each hidden layer is used as input to another layer in the network, e.g., the next hidden layer or the output layer. Each layer of the network generates an output from a received input in accordance with current values of a respective set of weights.

Zhao Jiaojiao et al.: "TubeR: Tubelet Transformer for Video Action Detection", 2022 IEEE/CVF Conference on Computer Vision and Pattern Recognition (CVPR), IEEE, 18 June 2022 proposed TubeR for spatio-temporal video action detection. Zhao et al. proposed to directly detect an action tubelet in a video by simultaneously performing action localization and recognition from a single representation.

Li Zexian et al.: "STD-TR: End-to-End Spatio-Temporal Action Detection with Transformers", 2021 China Automation Congress (CAC), IEEE, 22 October 2021 proposed STD-TR, a spatio-temporal action detection framework with an end-to-end transformer structure. STD-TR employs two branches to extract feature from video clip and key frame concurrently, then sends the aggregated feature to a transformer encoder-decoder.

### SUMMARY

The present invention is defined by the appended claims.

This specification describes a system implemented as computer programs on one or more computers that performs an action localization task on an input video that includes a sequence of video frames.

Particular embodiments of the subject matter described in this specification can be implemented so as to realize one or more of the following advantages.

Spatio-temporal action localization is an important problem with many real-world applications, e.g., for robotics, security, video search engines, and many other applications.

The techniques described in this specification leverage a set of learned queries in order to solve this problem, i.e., to perform action localization, more accurately than existing techniques. In particular, by using the learned queries in combination with a video encoder neural network and a decoder neural network, the system can accurately perform action localization without requiring any additional pre-processing, e.g., in the form of region proposals, or post-processing, e.g., in terms of non-maximal suppression, as is required by other approaches. As a result, the described techniques can perform accurate action localization in a computationally efficient and low-latency manner.

Moreover, the use of learned queries allows the components of the system to be trained using any of a variety of training labels, e.g., with either sparse bounding-box supervision on individual frames or full "tubelet" annotations through the training video. The described techniques are therefore widely applicable and can be used even when the available training data is suboptimal for the action localization task, i.e., includes only sparse bounding box annotations.

Additionally, this specification describes that the learned queries can be "factorized," introducing an inductive bias into the model that assists in performing spatio-temporal association and therefore improves performance on the action localization task.

Additionally, when the decoder neural network is a self-attention-based neural network, this specification describes that the self-attention layers, the cross-attention layers, or both can use an attention mechanism that is factorized across space and time, improving the computational efficiency of the system without impacting (and, in at least some cases, improving) performance on the action localization task.

The details of one or more embodiments of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 shows an example neural network system.
FIG. 2 is a flow diagram of an example process for performing action localization.
FIG. 3 shows an example of the operation of the system.
FIG. 4 shows an example of performing factorized self-attention and factorized cross-attention.
FIG. 5 shows an example of the joint training process.
FIG. 6 shows an example of the performance of the described techniques.

Like reference numbers and designations in the various drawings indicate like elements.

### DETAILED DESCRIPTION

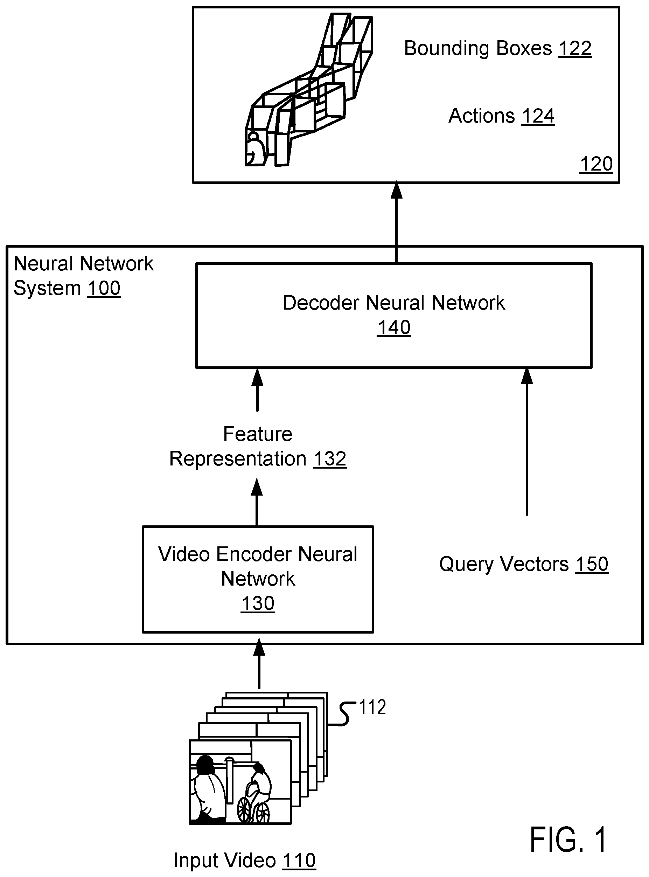

FIG. 1 shows an example neural network system 100. The neural network system 100 is an example of a system implemented as computer programs on one or more computers in one or more locations, in which the systems, components, and techniques described below can be implemented.

The neural network system 100 is a system that performs an action localization task on an input video 110 that includes a sequence of video frames 112.

In particular, the system 100 processes the input video 110, i.e., processes the intensity (color) values of the pixels of the video frames 112 in the video 110, to generate an action localization output 120 for the input video 110.

The action localization output 120 identifies, for each of one or more agents that are depicted in at least some of the frames 112 of the video 110, respective bounding boxes 122 in each of one or more frames 112 of the video that depict the agent and, for each bounding box 122, an action 124 that is being performed by the agent when depicted in the bounding box 122.

The agents can be, e.g., humans, other animals, robots, vehicles, or other dynamic objects that can interact with an environment to perform actions.

In particular, the action localization output 120 includes, for each of one or more agents depicted in the video 110, data specifying, for each of one or more video frames 112 in the video 110, (i) a respective bounding box 122 in the video frame that depicts the agent and (ii) a respective action 124 from a set of actions that is being performed by the agent in the video frame 112, i.e., as depicted in the bounding box 122 for the agent in the video frame 112.

The set of actions can include any appropriate action that can be performed by an agent in an environment. Examples of actions include walking, running, jumping, sitting, watching, grasping, talking, playing, and so on.

The set of bounding boxes 122 and corresponding actions 124 for a given agent will be referred to in this specification as a "tubelet."

The action localization outputs 120 generated by the system 100 can then be provided as output by the system 100.

As a particular example, the system 100 can be part of a perception system embedded within an agent, e.g., a real-world robot or an autonomous vehicle, that processes images and optionally other sensor data collected by sensors of the agent and the action localization output 120 can be used by the perception system or other software on-board the agent to control the agent as the agent navigates through the environment.

As another particular example, the system 100 can be part of a perception system embedded within or in communication with a different type of device that processes sensor data, e.g., a camera monitoring system, a mobile phone, and so on. The action localization outputs 120 generated by the system can be used as part of a pre-processing stage before videos are displayed to a user or can be used to automatically trigger other actions.

As yet another particular example, client devices can interact with the system 100 through an application programming inference (API), e.g., a web-based API. In particular, client devices can submit an API call that includes or identifies a video to be analyzed and the system 100 can provide, in response, data identifying the action localization output 120 for the video. For example, the system can format the action localization output 120 in a specified format, e.g., as a JavaScript Object Notation (JSON) file or as a file in another type of data-interchange format, and provide the file in response to the API call.

To generate action selection outputs 120, the system 100 uses a video encoder neural network 130, a decoder neural network 140, and a set of query vectors 150.

Generally, the query vectors in the set of query vectors 150 are learned vectors that have been learned during the training of the decoder neural network 140 and the video encoder neural network 130.

More specifically, the system 100 processes the set of query vectors 150 and the input video 110 to perform action localization on the input video 110.

As part of the processing, the system 100 processes the input video 110 using the video encoder neural network 130 to generate a feature representation 132 of the input video 110 and then processes the set of query vectors 150 and the feature representation 132 using the decoder neural network 140 to generate the action localization output 120 for the video 110.

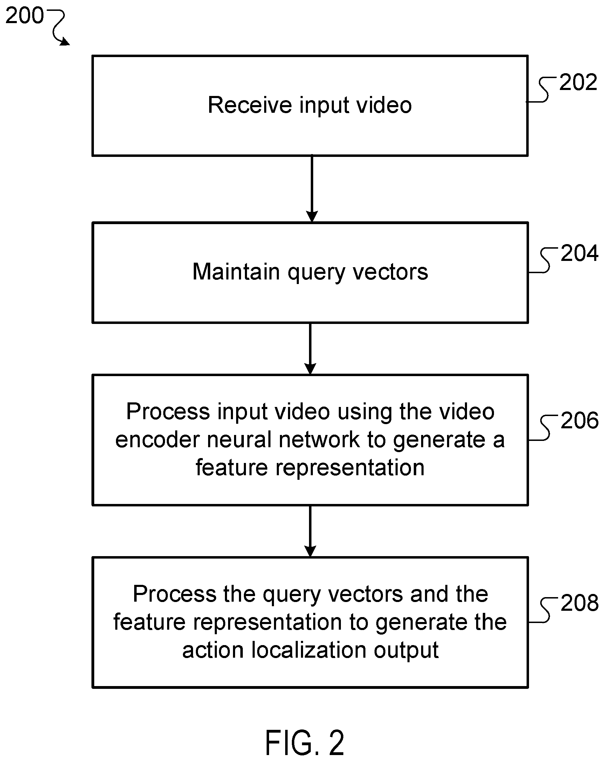

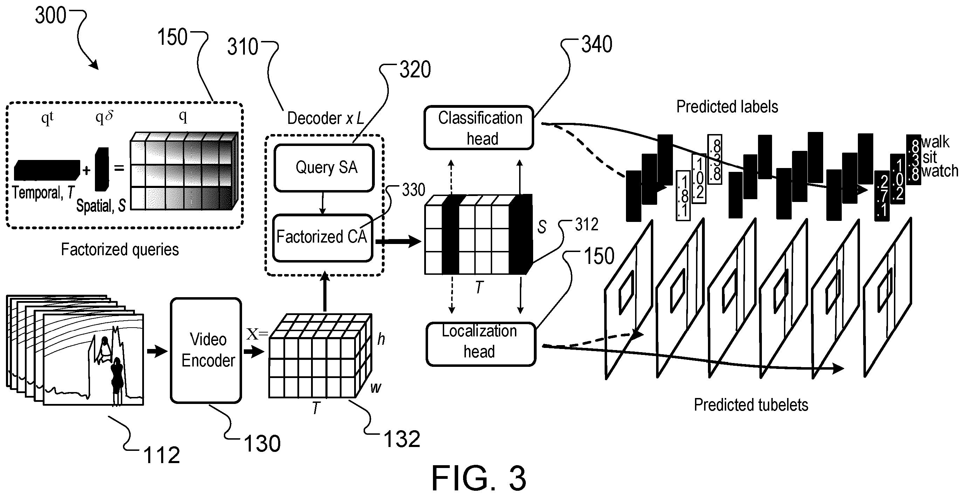

Generating the action localization output 120 will be described in more detail below with reference to FIGS. 2 and 3.

Prior to using the video encoder neural network 130, the decoder neural network 140, and the set of query vectors 150 to generate action localization outputs 120, the system 100 or another training system performs a joint training process to train the video encoder neural network 130 and the decoder neural network 140 and to learn the set of query vectors 150.

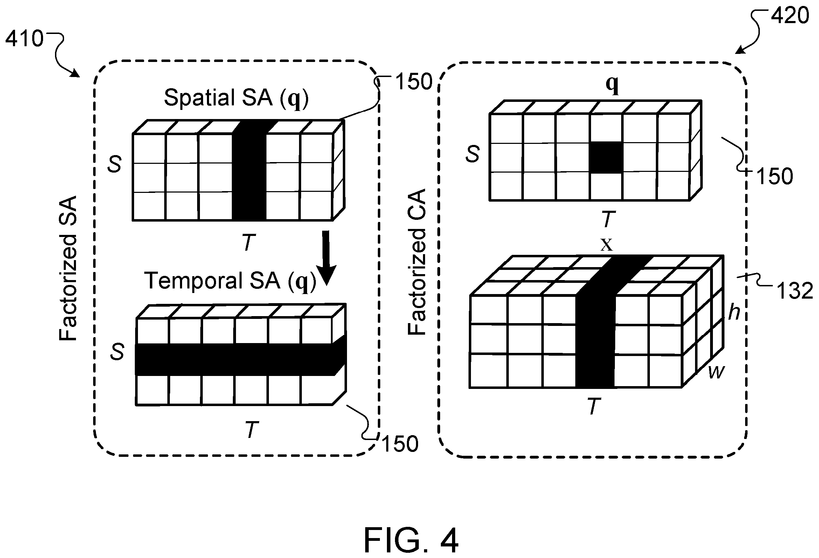

Performing the joint training process is described in more detail below with reference to FIG. 4.

FIG. 2 is a flow diagram of an example process 200 for generating an action localization output. For convenience, the process 200 will be described as being performed by a system of one or more computers located in one or more locations. For example, a neural network system, e.g., the neural network system 100 of FIG. 1, appropriately programmed, can perform the process 200.

The system receives an input video that includes a sequence of video frames (step 202).

The system maintains a set of query vectors (step 204). Generally, as described above, the set of query vectors have been learned during joint training of the video encoder neural network and the decoder neural network. That is, after training, the maintained query vectors are kept fixed and are independent of the input video, the same set of query vectors are used for each input video received by the system and are independent of the content of any given input video.

More specifically, the set of query vectors includes a respective set of query vectors corresponding to each of the video frames in the sequence. For a given video frame, the set of query vectors includes a respective query vector for each of multiple spatial positions within the video frame.

Accordingly, each query vector has a temporal index that identifies the corresponding video frame for the query vector and a spatial index that identifies a spatial position of the query vector within the video frame.

For example, when there are *S* query vectors that correspond to each of the video frames in the sequence and *T* video frames in the sequence, each query vector has a temporal index *i* ∈ {1, *... T*} and a spatial index *i* ∈ {1, ...*S*}.

In some implementations, each query vector is learned independently from each other query vector. In other words, during the joint training, the system can initialize each query vector randomly and learn each query vector independently.

In some other implementations, each query vector is a combination of (i) a spatial query vector for the spatial index of the query vector and (ii) a temporal query vector for the temporal index of the query vector. For example, each query vector can be a sum of (i) the spatial query vector for the spatial index of the query vector and (ii) the temporal query vector for the temporal index of the query vector.

In these implementations, to obtain the final query vectors, the system repeats the spatial query vectors across all frames, and adds them to the corresponding temporal query vector at each location. Thus, in these implementations, the query vector **q***_{i,j}* at temporal index *I* and spatial index *j* can be represented as ${q}_{i , j} = {q}_{i}^{t} + {q}_{j}^{s}$ where ${q}_{i}^{t}$ is the temporal query vector for temporal index *i* and ${q}_{j}^{s}$ is the spatial query vector for spatial index *j*.

This "factorized" query representation means that the same spatial embedding is used across all frames. This encourages the *j*-th spatial query embedding, ${q}_{j}^{s}$, to bind to the same location across different frames of the video, and since objects typically have small displacements from frame to frame, may help to associate bounding boxes within a tubelet together.

Thus, in these implementations, during the joint training, the system learns the spatial query vectors and temporal query vectors and composites them to generate the final query vectors rather than independently learning a query vector for each spatial location in each video frame.

The system then processes the set of query vectors and the input video to perform action localization on the input video.

As part of this processing, the system processes the input video using the video encoder neural network to generate a feature representation of the input video (step 206).

Generally, the feature representation includes a respective feature vector for each location in a spatio-temporal representation of the input video.

That is, if the input video **X** is a *T x* H x *W* x 3 input, where *T, H* and *W* are the original temporal- (e.g., number of frames of video), height- (e.g., height in pixels of each frame) and width- (e.g., width in pixels of each frame) dimensions of the input video, the feature representation **x** is a *t x h* x *w* x *d* representation, where *t, h* and *w* are the spatio-temporal dimensions of the feature representation, and *d* its latent dimension.

In some implementations, *t = T* and the feature representation includes a respective set of feature vectors for each of the video frames, i.e., with the set of feature vectors for each video frame including a respective feature vector for each *H*/*h* x *W*/*w* region of the video frame.

The video encoder neural network can generally have any appropriate architecture that allows the video encoder neural network to map an input video to a feature representation.

As one example, the video encoder neural network can be a convolutional neural network, e.g., one that includes one or more convolutional layers that perform convolutions along the temporal dimension.

As another example, the video encoder neural network can be a Transformer encoder neural network. One example of such a neural network is the Video Vision Transformer (ViVit) encoder neural network.

The system processes the set of query vectors and the feature representation using the decoder neural network to generate the action localization output for the video (step 208).

As described above, the action localization output includes, for each of one or more agents depicted in the video, data specifying, for each of one or more video frames in the video, a respective bounding box in the video frame that depicts the agent and a respective action from a set of actions that is being performed by the agent in the video frame.

The decoder neural network can generally have any appropriate architecture that maps the query vectors and the feature representation to the action localization output.

As one example, the decoder neural network can include an attention neural network and one or more output heads. An output head is a collection of one or more neural network layers that receives data from the attention neural network and processes the received data to generate an output.

In this example, the decoder neural network can process the set of query vectors and the feature representation using the attention neural network to update each of the query vectors in the set (conditioned on the feature representation) and, after updating each of the query vectors in the set, process the query vectors using the one or more output heads to generate the action localization output.

As a particular example, for each of at least a subset of the query vectors, the decoder neural network can process the query vector using a localization head to generate one or more bounding boxes that are predicted to correspond to an agent and process the query vector using a classification head to generate, for each of the one or more bounding boxes, a respective score for each action in the set of actions. For each the one or more bounding boxes, the system can then select an action from the set of actions using the respective scores, e.g., by selecting the action with the highest score or by sampling an action in accordance with the action scores.

In some implementations, the total number of query vectors S for each video frame may be greater than the total number of agents in the input video. To account for this, the set of actions can include a "background" action. The background action can indicate that the corresponding bounding box is part of the background of the scene rather than depicting an agent.

Thus, in these implementations, in response to selecting the background action for a given bounding box, the system can determine not to include the bounding box in the action localization output.

Generally, to associate query vectors with agents, the system can associate each query vector having the same spatial index with the same agent.

That is, the system generates, for a given spatial index, a single tubelet that includes bounding boxes and actions generated from the query vectors having the given spatial index (without including any bounding boxes for which the background action was selected).

In some cases, all of the actions (or, more generally, at least a threshold number of actions) corresponding to a given spatial index can be the background action. As a result, the system can refrain from including a tubelet corresponding to the given spatial index in the action localization output.

For example, when the query vectors are factorized query vectors that are each the sum of a temporal query vector and a spatial query vector, the system can identify, for each spatial query vector, the bounding boxes (and corresponding actions) for each query vector that is generated from the spatial query vector as a tubelet, without including any bounding box that has a corresponding action that is the background action. That is, the system can remove each bounding box that is associated with the background action from the set of candidate tubelets to generate the final action localization output.

Generally, the attention neural network includes one or more self-attention blocks that each update the set of query vectors by performing self-attention across the set of query vectors and one or more cross-attention blocks that each update the set of query vectors by performing cross-attention into the feature representation of the video. The attention neural network can also include additional components, e.g., feed-forward subnetworks, residual connections, normalization operations, and so on.

In particular, each self-attention block receives the set of query vectors, i.e., after being updated by the preceding component in the attention neural network or, if the self-attention block is the first component in the attention neural network, the set of query vectors as maintained by the system and updates the set of query vectors by applying an attention mechanism over the set of query vectors. The attention mechanism is referred to as a "self-attention" mechanism because the queries, keys, and values for the attention mechanism are all generated from the set of query vectors.

Each cross-attention block receives the set of query vectors, i.e., after being updated by the preceding component in the attention neural network or, if the cross-attention block is the first component in the attention neural network, the set of query vectors as maintained by the system and updates the set of query vectors by applying an attention mechanism over the set of query vectors conditioned on the feature representation. The attention mechanism is referred to as a "cross-attention" mechanism because the queries are generated from the set of query vectors while the keys and values are generated from the feature representation.

Thus, by processing the query vectors through the self-attention blocks and the cross-attention blocks, the attention neural network updates the query vectors conditioned on the feature representation.

This processing is described in more detail below.

FIG. 3 shows an example 300 of processing a set of query vectors **q** 150 and a feature representation **x** 132 using the decoder neural network to generate the action localization output.

In the example of FIG. 3, the query vectors are factorized query vectors that are each the sum of a temporal query vector and a spatial query vector.

In the example of FIG. 3, the attention neural network includes *L* attention layers 310 that each include a self-attention block 320 and a cross-attention block 330.

Each attention layer can also include one or more other operation blocks, e.g., a feed-forward neural network block, normalization operation blocks, residual connections, and so on.

More generally, however, the self-attention and cross-attention blocks can be arranged within the attention neural network in any appropriate configuration.

Additionally, in some implementations, the self-attention block 320, the cross-attention block 330, or both apply a factorized attention mechanism to update the query vectors received as input by the block.

Applying a factorized attention mechanism will be described in more detail below with reference to FIG. 4.

As shown in the example of FIG. 3, the attention neural network processes the set of query vectors **q** and the feature representation **x** through the attention layers 310 to generate an output **z** 312 that updates each of the query vectors **q** in the set.

After being updated by the attention neural network 310, the decoder neural network processes each of the query vectors using a localization head 350 to generate one or more bounding boxes that are predicted to correspond to an agent and processes the query vector using a classification head 340 to generate a set of action scores for each action in the set of actions. In the example of FIG. 3, the set of actions includes a "walk" action, a "sit" action, and a "watch" action.

The output of the localization head 350 can parameterize a bounding box in any of a variety of ways. For example, the output can be the coordinates of the center of the box and the box width and height. As another example, the output can be the coordinates of the top left of the box and the coordinates of the bottom right of the box.

The localization head 350 can have any appropriate neural network architecture. For example, the localization head 350 can be a single linear layer or can be a multi-layer perceptron (MLP).

The classification head 340 can also have any appropriate neural network architecture. For example, the classification head 340 can be a single linear layer or can be an MLP.

FIG. 4 shows an example of applying factorized self-attention 410 and factorized cross-attention 420.

Generally, to apply self-attention, each self-attention block includes one or more self-attention heads, with each self-attention head being configured to map the set of query vectors to a respective head query vector, head key vector, and head value vector for each of the query vectors, e.g., using respective linear transformations.

The self-attention head then applies a query-key-value attention mechanism, e.g., dot-product attention or scaled dot-product attention, to the head query vectors, head key vectors, and head value vectors to generate a respective output query vector for each of the query vectors.

When there are multiple heads, the self-attention block then combines the respective output query vectors for the heads to generate the final updated query vectors. For example, the block can combine, e.g., sum, average, or concatenate the respective output query vectors for each query vector to generate an initial updated query vector and then optionally apply a linear transformation to the initial updated query vector to generate the final updated query vector.

However, when performing factorized self-attention 410, each head employs a first self-attention mechanism 412 that updates the head query vectors by, for each video frame, self-attending only within the video frame using the head query vectors, the head key vectors, and head value vectors for the set of query vectors corresponding to the video frame. That is, for each head query vector, the attention mechanism assigns non-zero attention weights only to head key vectors that are derived from query vectors that are from the same video frame as the query vector from which the head query vector is derived.

Each head then employs a second self-attention mechanism 414 that updates the head query vectors by, for each spatial index, self-attending only among the query vectors that have the spatial index using the head query vectors, the head key vectors, and head value vectors for the query vectors that have the spatial index. That is, for each head query vector, the attention mechanism assigns non-zero attention weights only to head key vectors that are derived from query vectors that have the same spatial index as the query vector from which the head query vector is derived.

Generally, to apply cross-attention, for each video frame, the cross-attention block updates the set of query vectors corresponding to the video frame by cross-attending over all of the feature vectors in the feature representation. That is, the cross-attention block generates a respective cross-attention query for each query vector and respective key and value vectors for each feature vector in the feature representation and then applies a query-key-value attention mechanism, e.g., dot-product attention or scaled dot-product attention, to the cross-attention query vectors, cross-attention key vectors, and cross-attention value vectors to update the query vectors.

However, to apply factorized cross-attention 420, for each video frame, the cross-attention block updates the set of query vectors corresponding to the video frame by cross-attending over only the feature vectors for the video frame in the feature representation and not the feature vectors for any of the other video frames in the feature representation. That is, for each cross-attention query vector, the attention mechanism assigns non-zero attention weights only to cross-attention key vectors that are derived from feature vectors that are from the same video frame as the query vector from which the cross-attention query vector is derived.

Factorizing one or both of the attention mechanisms as described above introduces a temporal locality inductive bias, thereby improving task performance, while also increasing model efficiency by decreasing the computational cost of performing self-attention and cross-attention, i.e., because the number of dot products required to be computed is significantly reduced.

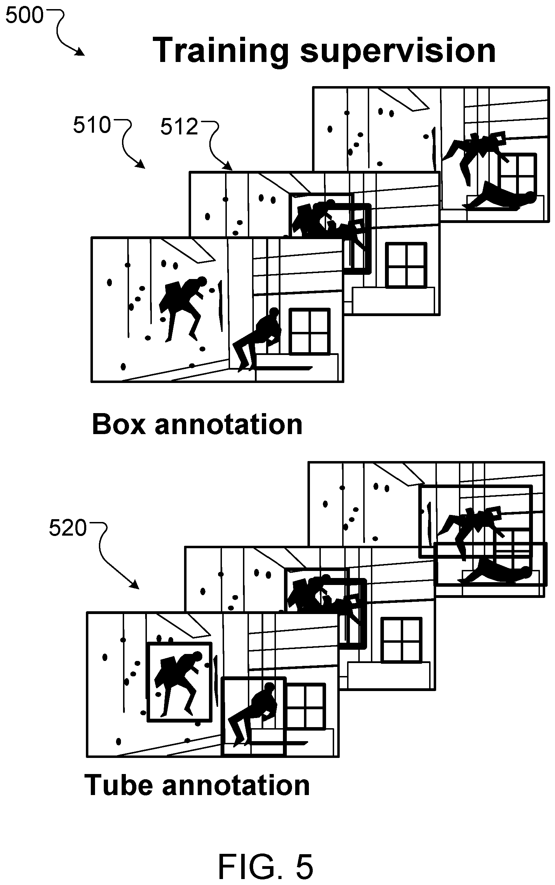

FIG. 5 shows an example of the joint training of the vision encoder neural network and the decoder neural network as performed by a training system.

In particular, the training system trains the video encoder neural network and the decoder neural network on a loss that measures errors in action localization outputs generated for a set of training videos relative to ground truth localization outputs for the set of training videos relative to ground truth localization outputs for the set of training videos.

Generally, the system can train the video encoder neural network and the decoder neural network under any of a variety of labelling paradigms, i.e., with any number of the frames in a given training video being annotated with ground truth localization outputs.

As a particular example, for a given training video, the system can train the video encoder neural network and the decoder neural network on a loss function that satisfies:$L \left(y, \hat{y}\right) = \frac{1}{\left|τ\right|} {\sum }_{t ∈ τ} {L}_{frame} \left(y, \hat{y}\right) ,$ where ***y*** is the ground truth localization output and ***ŷ*** is the localization output generated by the system, *τ* is the set of labelled frames, i.e., the set of frames for which ground truth localization outputs are available, and *L*_{frame} (***y**,* ***ŷ***) is a training loss for a given frame after matching the bounding boxes within the frame to the corresponding bounding boxes in the ground truth localization output for the frame.

As one example, *L*_{frame} can be expressed as: ${L}_{frame} \left({b}^{t}, {\hat{b}}^{t}, {a}^{t}, {\hat{a}}^{t}\right) = {\sum }_{i} {L}_{box} \left({b}_{i}^{t}, {\hat{b}}_{i}^{t}\right) + {L}_{iou} \left({b}_{i}^{t}, {\hat{b}}_{i}^{t}\right) + {L}_{class} \left({a}_{i}^{t}, {\hat{a}}_{i}^{t}\right) ,$ where ${b}_{i}^{t}$ is the i-th ground truth bounding box, ${\hat{b}}_{i}^{t}$ is the bounding box that has been matched to the ground truth bounding box, ${a}_{i}^{t}$ is the ground truth action label for the i-th ground truth bounding box, and ${\hat{a}}_{i}^{t}$ is the set of action scores for the bounding box that has been matched to the ground truth bounding box. As one example, *L*_{box} can be an L1 regression loss, *L*ᵢₒᵤ can be a generalized IoU loss, and *L*_{class} can be a cross-entropy loss.

In some implementations, the training data used for the joint training process includes box annotations 510. In these implementations, the training data includes, for each training video, ground truth bounding boxes for only a proper subset of the video frames in the training video. As shown in the example of FIG. 5, the training data may include only sparse bounding box annotations for a selected keyframe 512 and no bounding box annotations for other frames.

In some other implementations, the training data used for the joint training includes tube annotations 520 that identify respective sequences of bounding boxes that include a respective bounding box in each of the video frames for each of one or more agents depicted in the training video.

Because the above loss is computed using only the set of labeled frames and because of the use of the learned queries, the system can effectively train the neural networks (and learn the queries) under either of these labelling paradigms.

Thus, as part of the training, i.e., as part of computing the frame losses for the frames, the system matches predicted bounding boxes generated using the decoder neural network to ground truth bounding boxes within each of one or more video frames of each training video.

The system can perform the matching of predicted bounding boxes to ground truth bounding boxes in any of a variety of ways.

As one example, e.g., when the annotations are sparse, the system can independently perform bipartite matching for each of the one or more video frames. For example, the system can use the Hungarian algorithm or another algorithm to obtain multiple permutations of the S elements for each video frame and then select, for each video frame, the permutation that minimizes the frame loss.

As another example, when the annotations are dense, the system can perform tubelet matching across each training video. That is, the system can require that all queries with the same spatial index be matched to bounding boxes corresponding to the same agent throughout the video. That is, the system can generate multiple permutations, where each association matches each agent in the video with a respective spatial index, and then select, as the final permutation, the permutation that minimizes the sum of the frame losses for the video frames in the video.

In any of the above examples, during the training, the system learns the query vectors during the training by determining gradients of the loss function with respect to the query vectors and then updating the query vectors using the gradients, e.g., by applying an optimizer, e.g., Adam, SGD, AdamW, and so on, to the gradients in order to update the query vectors. When the query vectors are factorized, rather than update the query vectors independently, the system determines gradients of the loss function with respect to the spatial query vectors and the temporal query vectors and then updates the spatial and temporal query vectors using the gradients.

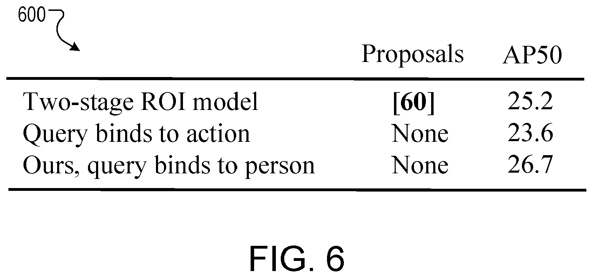

FIG. 6 shows an example 600 of the performance of the described techniques.

In particular, the example 600 shows the performance (in terms of accuracy) of the described techniques ("ours") relative to two baselines on the AVA data set controlling for the same visual encoder, resolution, and training settings. The described techniques outperform both a proposal-based ROI model and an approach that binds each query to an action in terms of the AP50 metric on the AVA data set.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a data communication network.

In this specification, the term "database" is used broadly to refer to any collection of data: the data does not need to be structured in any particular way, or structured at all, and it can be stored on storage devices in one or more locations. Thus, for example, the index database can include multiple collections of data, each of which may be organized and accessed differently.

Similarly, in this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, e.g., a TensorFlow framework or a Jax framework.

Embodiments of the subject matter described in this specification can be implemented in a computing system that includes a back end component, e.g., as a data server, or that includes a middleware component, e.g., an application server, or that includes a front end component, e.g., a client computer having a graphical user interface, a web browser, or an app through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel
processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A method performed by one or more computers, the method comprising:
receiving (202) an input video comprising a sequence of video frames;
maintaining (204) a set of query vectors, wherein the set of query vectors comprises a respective set of query vectors corresponding to each of the video frames, wherein:
each query vector has a temporal index that identifies the corresponding video frame for the query vector and a spatial index that identifies a spatial position of the query vector within the video frame, and
each query vector is a combination of (i) a spatial query vector for the spatial index of the query vector and (ii) a temporal query vector for the temporal index of the query vector; and
processing the set of query vectors and the input video to perform action localization on the input video, comprising:
processing (206) the input video using a video encoder neural network to generate a feature representation of the input video; and
processing (208) the set of query vectors and the feature representation using a decoder neural network to generate an action localization output for the video, wherein the processing comprises:
processing the set of query vectors and the feature representation using an attention neural network of the decoder neural network to update each of the query vectors in the set; and
after updating each of the query vectors in the set, processing the query vectors using one or more output heads of the decoder neural network to generate the action localization output, wherein the action localization output comprises, for each of one or more agents depicted in the video, data specifying, for each of one or more video frames in the video, a respective bounding box in the video frame that depicts the agent and a respective action that is being performed by the agent in the video frame from a set of actions,
wherein the set of query vectors have been learned during joint training of the video encoder neural network and the decoder neural network.

2. The method of claim 1, wherein the feature representation includes a respective set of feature vectors for each of the video frames.

3. The method of any of claims 1-2, wherein each query vector is a sum of (i) the spatial query vector for the spatial index of the query vector and (ii) the temporal query vector for the temporal index of the query vector.

4. The method of any preceding claim, wherein processing the query vectors using one or more output heads to generate the action localization output comprises, for each of at least a subset of the query vectors:
processing the query vector using a localization head to generate one or more bounding boxes that are predicted to correspond to an agent; and
processing the query vector using a classification head to generate, for each of the one or more bounding boxes, a respective score for each action in the set of actions.

5. The method of claim 4, wherein processing the query vectors using one or more output heads to generate the action localization output comprises, for each of at least the subset of the query vectors:
for each the one or more bounding boxes, selecting an action from the set of actions using the respective scores.

6. The method of any one of claims 4-5, wherein the set of actions includes a background action.

7. The method of claim 6, wherein processing the set of query vectors and the feature representation using the decoder neural network comprises:
in response to selecting the background action for a given bounding box, determining not to include the bounding box in the action localization output.

8. The method of any preceding claim, wherein the attention neural network comprises:
one or more self-attention blocks that each update the set of query vectors by performing self-attention across the set of query vectors; and
one or more cross-attention blocks that each update the set of query vectors performing cross-attention into the feature representation of the video.

9. A system comprising:
one or more computers; and
one or more storage devices storing instructions that, when executed by the one or more computers, cause the one or more computers to perform the respective operations of the method of any one of claims 1-8.

10. One or more computer-readable storage media storing instructions that when executed by one or more computers cause the one or more computers to perform the respective operations of the method of any one of claims 1-8.

## Patentansprüche

1. Verfahren, das durch einen oder mehrere Computer durchgeführt wird, wobei das Verfahren Folgendes umfasst:
Empfangen (202) eines Eingabevideos, das eine Folge von Videoeinzelbildern umfasst;
Aufrechterhalten (204) eines Satzes von Anfragevektoren, wobei der Satz von Anfragevektoren einen jeweiligen Satz von Anfragevektoren umfasst, der jedem der Videoeinzelbilder entspricht, wobei:
jeder Anfragevektor einen zeitlichen Index, der das entsprechende Videoeinzelbild für den Anfragevektor identifiziert, und einen räumlichen Index, der eine räumliche Position des Anfragevektors innerhalb des Videoeinzelbildes identifiziert, aufweist und
jeder Anfragevektor eine Kombination aus (i) einem räumlichen Anfragevektor für den räumlichen Index des Anfragevektors und (ii) einem zeitlichen Anfragevektor für den zeitlichen Index des Anfragevektors ist; und
Verarbeiten des Satz von Anfragevektoren und des Eingabevideos, um eine Aktionslokalisierung in dem Eingabevideo durchzuführen, umfassend:
Verarbeiten (206) des Eingabevideos unter Verwendung eines Video-Encoder-Neuronalnetzes, um eine Merkmalsdarstellung des Eingabevideos zu generieren; und
Verarbeiten (208) des Satzes von Anfragevektoren und der Merkmalsdarstellung unter Verwendung eines Decoder-Neuronalnetzes, um eine Aktionslokalisierungsausgabe für das Video zu generieren, wobei das Verarbeiten Folgendes umfasst:
Verarbeiten des Satzes von Anfragevektoren und der Merkmalsdarstellung unter Verwendung eines Aufmerksamkeitsneuralnetzes des Decoder-Neuronalnetzes, um jeden der Anfragevektoren in dem Satz zu aktualisieren; und,
nach dem Aktualisieren jedes der Anfragevektoren in dem Satz, Verarbeiten der Anfragevektoren unter Verwendung eines oder mehrerer Ausgabeköpfe des Decoder-Neuronalnetzes, um die Aktionslokalisierungsausgabe zu generieren, wobei die Aktionslokalisierungsausgabe für jeden des einen oder der mehreren in dem Video dargestellten Agenten Daten umfasst, die für jedes des einen oder der mehreren Videoeinzelbilder in dem Video einen jeweiligen Begrenzungsrahmen in dem Videoeinzelbild, der den Agenten abbildet, und eine jeweilige Aktion, die durch den Agenten in dem Videoeinzelbild aus einem Satz von Aktionen durchgeführt wird, spezifizieren,
wobei der Satz von Anfragevektoren während eines gemeinsamen Trainings des Video-Encoder-Neuronalnetzes und des Decoder-Neuronalnetzes gelernt wurde.

2. Verfahren nach Anspruch 1, wobei die Merkmalsdarstellung einen jeweiligen Satz von Merkmalsvektoren für jedes der Videoeinzelbilder beinhaltet.

3. Verfahren nach einem der Ansprüche 1-2, wobei jeder Anfragevektor eine Summe aus (i) dem räumlichen Anfragevektor für den räumlichen Index des Anfragevektors und (ii) dem zeitlichen Anfragevektor für den zeitlichen Index des Anfragevektors ist.

4. Verfahren nach einem der vorhergehenden Ansprüche, wobei das Verarbeiten der Anfragevektoren unter Verwendung eines oder mehrerer Ausgabeköpfe, um die Aktionslokalisierungsausgabe zu generieren, für jeden mindestens eines Teilsatzes der Anfragevektoren Folgendes umfasst:
Verarbeiten des Anfragevektors unter Verwendung eines Lokalisierungskopfes, um einen oder mehrere Begrenzungsrahmen, die voraussichtlich einem Agenten entsprechen, zu generieren; und
Verarbeiten des Anfragevektors unter Verwendung eines Klassifizierungskopfes, um für jeden des einen oder der mehreren Begrenzungsrahmen eine entsprechende Bewertung für jede Aktion in dem Satz von Aktionen zu generieren.

5. Verfahren nach Anspruch 4, wobei das Verarbeiten der Anfragevektoren unter Verwendung eines oder mehrerer Ausgabeköpfe, um die Aktionslokalisierungsausgabe zu generieren, für jeden mindestens des Teilsatzes der Anfragevektoren Folgendes umfasst:
für jeden des einen oder der mehreren Begrenzungsrahmen, Auswählen einer Aktion aus dem Satz von Aktionen unter Verwendung der jeweiligen Bewertungen.

6. Verfahren nach einem der Ansprüche 4-5, wobei der Satz von Aktionen eine Hintergrundaktion beinhaltet.

7. Verfahren nach Anspruch 6, wobei das Verarbeiten des Satzes von Anfragevektoren und der Merkmalsdarstellung unter Verwendung des Decoder-Neuronalnetzes Folgendes umfasst:
als Reaktion auf das Auswählen der Hintergrundaktion für einen gegebenen Begrenzungsrahmen, Bestimmen, den Begrenzungsrahmen nicht in die Aktionslokalisierungsausgabe einzubeziehen.

8. Verfahren nach einem der vorhergehenden Ansprüche, wobei das Aufmerksamkeitsneuronalnetz Folgendes umfasst:
einen oder mehrere Selbstaufmerksamkeitsblöcke, die jeweils den Satz von Anfragevektoren durch Durchführen von Selbstaufmerksamkeit über den Satz von Anfragevektoren aktualisieren; und
einen oder mehrere Queraufmerksamkeitsblöcke, die jeweils den Satz von Anfragevektoren, welche eine Queraufmerksamkeit in die Merkmalsdarstellung des Videos durchführen, aktualisieren.

9. System, umfassend:
einen oder mehrere Computer; und
eine oder mehrere Speichervorrichtungen, die Anweisungen speichern, welche bei Ausführung durch den einen oder die mehreren Computer den einen oder die mehreren Computer dazu veranlassen, die jeweiligen Vorgänge des Verfahrens nach einem der Ansprüche 1-8 durchzuführen.

10. Ein oder mehrere computerlesbare Speichermedien, die Anweisungen speichern, welche bei Ausführung durch einen oder mehrere Computer den einen oder die mehreren Computer dazu veranlassen, die jeweiligen Vorgänge des Verfahrens nach einem der Ansprüche 1-8 durchzuführen.

## Revendications

1. Procédé réalisé par un ou plusieurs ordinateurs, le procédé comprenant :
la réception (202) d'une vidéo d'entrée comprenant une séquence d'images vidéo ;
le maintien (204) d'un ensemble de vecteurs de requête, dans lequel l'ensemble de vecteurs de requête comprend un ensemble respectif de vecteurs de requête correspondant à chacune des images vidéo, dans lequel :
chaque vecteur de requête possède un index temporel qui identifie l'image vidéo correspondante pour le vecteur de requête et un index spatial qui identifie une position spatiale du vecteur de requête au sein l'image vidéo, et
chaque vecteur de requête est une combinaison (i) d'un vecteur de requête spatial pour l'index spatial du vecteur de requête et (ii) d'un vecteur de requête temporel pour l'index temporel du vecteur de requête ; et
le traitement de l'ensemble de vecteurs de requête et de la vidéo d'entrée pour réaliser une localisation d'actions sur la vidéo d'entrée, comprenant :
le traitement (206) de la vidéo d'entrée à l'aide d'un réseau neuronal encodeur de vidéo pour générer une représentation de caractéristiques de la vidéo d'entrée ; et
le traitement (208) de l'ensemble de vecteurs de requête et de la représentation de caractéristiques à l'aide d'un réseau neuronal décodeur pour générer une sortie de localisation d'actions pour la vidéo, dans lequel le traitement comprend :
le traitement de l'ensemble de vecteurs de requête et de la représentation de caractéristiques à l'aide d'un réseau neuronal d'attention du réseau neuronal décodeur pour mettre à jour chacun des vecteurs de requête de l'ensemble ; et
après la mise à jour de chacun des vecteurs de requête de l'ensemble, le traitement des vecteurs de requête à l'aide d'une ou plusieurs têtes de sortie du réseau neuronal décodeur pour générer la sortie de localisation d'actions, dans lequel la sortie de localisation d'actions comprend, pour chacun d'un ou plusieurs agents représentés dans la vidéo, des données spécifiant, pour chacune d'une ou plusieurs images vidéo dans la vidéo, une boîte englobante respective dans l'image vidéo qui représente l'agent et une action respective réalisée par l'agent dans l'image vidéo à partir d'un ensemble d'actions,
dans lequel l'ensemble de vecteurs de requête a été appris lors de l'entraînement conjoint du réseau neuronal encodeur de vidéo et du réseau neuronal décodeur.

2. Procédé selon la revendication 1, dans lequel la représentation de caractéristiques comporte un ensemble respectif de vecteurs de caractéristiques pour chacune des images vidéo.

3. Procédé selon l'une quelconque des revendications 1 et 2, dans lequel chaque vecteur de requête est une somme (i) du vecteur de requête spatial pour l'index spatial du vecteur de requête et (ii) du vecteur de requête temporel pour l'index temporel du vecteur de requête.

4. Procédé selon une quelconque revendication précédente, dans lequel le traitement des vecteurs de requête à l'aide d'une ou plusieurs têtes de sortie pour générer la sortie de localisation d'actions comprend, pour chacun d'au moins un sous-ensemble des vecteurs de requête :
le traitement du vecteur de requête à l'aide d'une tête de localisation pour générer une ou plusieurs boîtes englobantes prédites comme correspondant à un agent ; et
le traitement du vecteur de requête à l'aide d'une tête de classification pour générer, pour chacune des une ou plusieurs boîtes englobantes, un score respectif pour chaque action dans l'ensemble d'actions.

5. Procédé selon la revendication 4, dans lequel le traitement des vecteurs de requête à l'aide d'une ou plusieurs têtes de sortie pour générer la sortie de localisation d'actions comprend, pour chacun d'au moins le sous-ensemble des vecteurs de requête :
pour chacune des une ou plusieurs boîtes englobantes, la sélection d'une action parmi l'ensemble d'actions à l'aide des scores respectifs.

6. Procédé selon l'une quelconque des revendications 4 et 5, dans lequel l'ensemble d'actions comporte une action en arrière-plan.

7. Procédé selon la revendication 6, dans lequel le traitement de l'ensemble de vecteurs de requête et de la représentation de caractéristiques à l'aide du réseau neuronal décodeur comprend : en réponse à la sélection de l'action en arrière-plan pour une boîte englobante donnée, la détermination de ne pas inclure la boîte englobante dans la sortie de localisation d'actions.

8. Procédé selon une quelconque revendication précédente, dans lequel le réseau neuronal d'attention comprend :
un ou plusieurs blocs d'auto-attention qui mettent chacun à jour l'ensemble de vecteurs de requête en réalisant une auto-attention sur l'ensemble de vecteurs de requête ; et
un ou plusieurs blocs d'attention croisée qui mettent chacun à jour l'ensemble de vecteurs de requête en réalisant une attention croisée dans la représentation de caractéristiques de la vidéo.

9. Système comprenant :
un ou plusieurs ordinateurs ; et
un ou plusieurs dispositifs de stockage stockant des instructions qui, lorsqu'elles sont exécutées par les un ou plusieurs ordinateurs, amènent les un ou plusieurs ordinateurs à réaliser les opérations respectives du procédé selon l'une quelconque des revendications 1 à 8.

10. Un ou plusieurs supports de stockage lisibles par ordinateur stockant des instructions qui, lorsqu'elles sont exécutées par un ou plusieurs ordinateurs, amènent les un ou plusieurs ordinateurs à réaliser les opérations respectives du procédé selon l'une quelconque des revendications 1 à 8.
